# EUROPEAN PATENT SPECIFICATION

(11) **EP 3 290 351 B1**
(45) Date of publication and mention of the grant of the patent: **22.05.2019**
(21) Application number: 16786636.7
(22) Date of filing: 14.03.2016
(51) Int. Cl.: B05B 11/00, B65D 53/02, C08L 23/06

(54) **LIQUID CONTAINER SEALING DEVICE**
FLÜSSIGKEITSBEHÄLTERDICHTUNGSVORRICHTUNG
DISPOSITIF D'ÉTANCHÉITÉ DE RÉCIPIENT DE LIQUIDE

(30) Priority: 30.04.2015 KR 20150061719; 16.07.2015 KR 20150101177
(43) Date of publication of application: 07.03.2018
(73) Proprietor: Samwha Plastic Ind. Co., Uiwang-si, Gyeonggi-do 16071 (KR)
(72) Inventor: CHO, Sung-Hwan, Seoul 07322 (KR); JANG, Geun, Gunpo-si Gyeonggi-do 15853 (KR)
(74) Representative: HGF Limited
(86) International application number: PCT/KR2016/002504
(87) International publication number: WO 2016/175449

(56) References cited:
- EP-A1- 2 153 908
- EP-B1- 0 240 817
- WO-A1-2012/066716
- CN-A- 103 879 653
- KR-A- 20130 048 082
- KR-Y1- 200 416 530
- US-A1- 2001 025 863
- US-A1- 2005 029 291
- US-A1- 2008 067 196

## Description

### [Technical Field]

The present disclosure relates to a liquid container sealing device that seals a liquid container.

### [Background Art]

Typically, a cosmetic is classified into a cold cream, a massage cream, or a nourishing cream depending on the intended use, and the creams are all liquid. The cosmetic is applied to the skin by dipping a finger into the liquid in the liquid container. After use, the container is closed by a lid in order to store the cosmetic.

Since the liquid container is used in a manner of dipping a finger into a liquid, there is a problem that a foreign substance may enter the liquid from the finger, contaminating the liquid.

In order to solve the above-mentioned problems, a liquid container having a pressurizing pumping device for discharging the liquid constantly by a predetermined amount according to pressing has been developed.

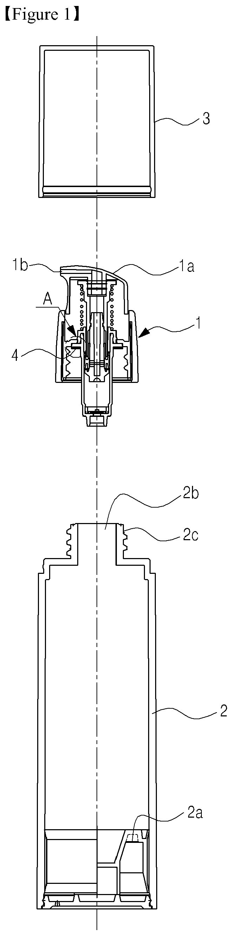

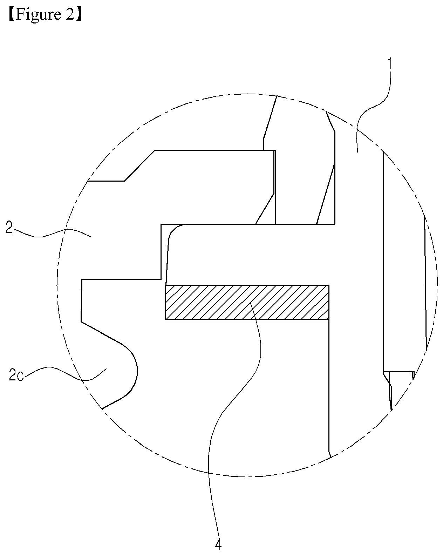

As illustrated in FIGS. 1 and 2, a pressurizing pumping device 1 is mounted on a nozzle cap of a liquid container 2 which contains a cosmetic and has a piston 2a provided therein in order to open/close an inlet 2b of the liquid container 2. When an operation button 1a is pressed by a finger, a vacuum pressure is generated inside the pumping device 1, and the content stored in the liquid container 2 is discharged to the outside through the nozzle 1b by a predetermined amount by the vacuum pressure. At this time, the pressurizing pumping device 1 is provided within the outer cover 3.

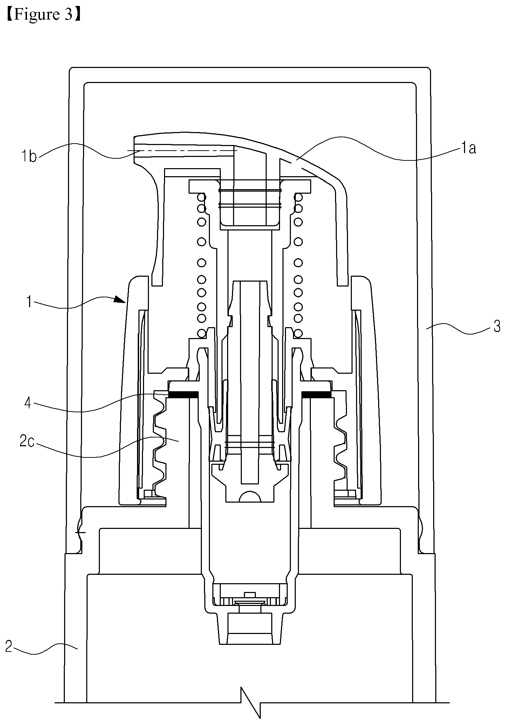

As illustrated in FIG. 3, the pressurizing pumping device 1 is screwed to a screw coupling part 2c formed on the liquid container 2. At this time, the pressurizing pumping device 1 is provided with a packing unit 4 in order to seal the liquid container 2 and the pressurizing pumping device 1.

However, since the liquid container with the conventional pressurizing pumping device is configured to use the pack unit made of a rubber material in order to seal the pressurizing pumping device and the liquid container, the rubber packing part may be easily damaged or deformed, which causes the sealing function to be lost and the cosmetic provided in the liquid container to be deteriorated. In addition, there is a disadvantage in that the assembly steps and time are increased because the packing unit should be assembled in the liquid container.

Therefore, there is a need for a device in which a liquid container and a pressurizing pumping device are sealed without the existing packing unit. CN103879653 A discloses a lotion pump comprising a liquid container sealing device according to the preamble of claim 1. EP2153908 A1 discloses a dispensing device for fluid substances.

### [Detailed Description of the Invention]

### [Technical Problem]

The present disclosure provides a sealing device for a liquid container, in which a sealing unit is configured such that, upon being coupled to the liquid container unit, the sealing unit is able to seal both the liquid container unit and a pumping device, whereby it is possible to simplify the assembly process of a product and to reduce costs because the existing packing unit provided for sealing the liquid container unit and the pumping device is not required, and it is possible not only to prevent the deterioration of the sealing function due to the breakage of the existing packing unit, but also to improve the sealing function and to prevent the deterioration of the cosmetic provided in the liquid container unit.

### [Technical Solution]

According to various embodiments of the present disclosure, a liquid container sealing device may include: a liquid container unit; a pumping device provided in the liquid container unit; a sealing coupling part provided at an upper end of the liquid container unit; a sealing unit that is oppositely engaged with an outer surface of the pumping device, thereby sealing the pumping device, and is oppositely engaged with an inner side of the sealing coupling part, thereby sealing the liquid container unit; a fixing unit that causes the sealing unit and the pumping device to be coupled and fixed to each other; and a fixing cover unit that fixes the pumping device and the sealing unit to the liquid container unit by being coupled to an outer side of the liquid container unit and by being coupled to the fixing unit.

According to various embodiments of the present disclosure, a liquid container sealing device may include: a liquid container unit including an outer container and an inner container; a pumping device provided in the inner container; a sealing coupling part provided at an upper end of the inner container; a sealing unit that is oppositely engaged with an outer surface of the pumping device, thereby sealing the pumping device, and is oppositely engaged with an inner side of the sealing coupling part, thereby sealing the liquid container unit; a fixing unit that fixedly couples the sealing unit and the pumping device to each other; and a fixing cover unit that fixes the pumping device and the sealing unit to the inner container by being coupled to an outer side of the inner container and by being coupled to the fixing unit.

### [Advantageous Effects]

According to various embodiments of the present disclosure, since the sealing unit is configured such that, upon being coupled to an inner container of the liquid container unit and the pumping device, the sealing unit is able to seal both the inner container and the pumping device, it is possible to simplify the assembly process of a product and to reduce a time for the assembly process costs because the existing packing unit provided for sealing the liquid container unit and the pumping device is not required. Further, it is also possible to improve productivity because the automatic assembly of the product is enabled, and to reduce costs due to the reduction of the number of components. In addition, the deterioration of the sealing function due to the damage of the existing packing portion can be prevented, and thus, the sealing function of the product can be improved. Therefore, there is an effect that the deterioration of the cosmetic provided in the liquid container unit can be prevented.

That is, it is possible to prevent the damage and deterioration of the cosmetic packed in the product due to the evaporation of the cosmetic filled in the product by improving the sealing force of the product.

### [Brief Description of Drawings]

The above and other aspects, features and advantages of the present disclosure will be more apparent from the following detailed description taken in conjunction with the accompanying drawings, in which:
FIG. 1 is an exploded side cross-sectional view illustrating the configuration of a conventional liquid container;
FIG. 2 is an enlarged side cross-sectional view of portion "A" in FIG. 1;
FIG. 3 is a side cross-sectional view illustrating the coupled state of the conventional liquid container;
FIG. 4 is an exploded perspective view illustrating the configuration of a liquid container sealing device according to an embodiment of the present disclosure;
FIG. 5 is an exploded side cross-sectional view illustrating the configuration of the liquid container sealing device according to the embodiment of the present disclosure;
FIG. 6 is a front view illustrating the coupled state of the liquid container sealing device according to the embodiment of the present disclosure;
FIG. 7 is a side cross-sectional view illustrating the coupled state of the liquid container sealing device according to the embodiment of the present disclosure;
FIG. 8 is an enlarged side cross-sectional view of portion "B" in FIG. 7; and
FIG. 9 is a side cross-sectional view illustrating the coupled state of an outer container and an inner container in the configuration of the liquid container sealing device according to the embodiment of the present disclosure.

### [Mode for Carrying out the Invention]

Terms used in various embodiments of the present disclosure will be briefly described, and then, various embodiments of the present disclosure will be described in detail.

By taking functions in various embodiments of the present disclosure into account, generic terms widely used nowadays have been chosen as the terms to be used, if possible. However, the terms may vary depending on the intention of a technician in the field, a precedent, the emergence of a new technology, and the like. In addition, in some cases, there may be terms arbitrarily selected by the applicant. In such a case, the meanings of the terms will be described in detail in the description of various embodiments of the present disclosure. Thus, the terms used in various embodiments of the present disclosure should be defined based on the meanings of the terms and the overall contents of the embodiments of the present disclosure instead of simple titles of the terms.

Although the terms including an ordinal number such as first, second, etc. can be used for describing various elements, the structural elements are not restricted by the terms. The terms are used merely for the purpose to distinguish an element from the other elements. For example, a first element could be termed a second element, and similarly, a second element could be also termed a first element without departing from the scope of the present disclosure.

Herein, the cosmetic is formed in the form of any one of a liquid cosmetic and a powder cosmetic. In the present embodiment, even though the liquid cosmetic and the powder cosmetic are exemplified, the present disclosure is not limited thereto. That is, the above-mentioned cosmetic may also be applied to cosmetics other than the above-described liquid cosmetic and powder cosmetic. Here, the present embodiment is described with reference to a case in which a liquid cosmetic is applied.

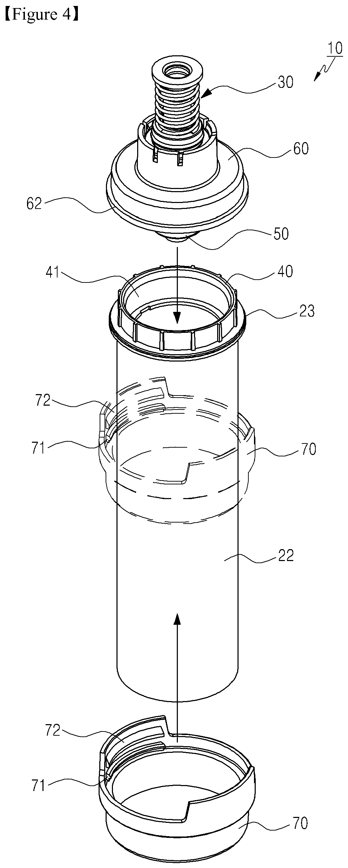

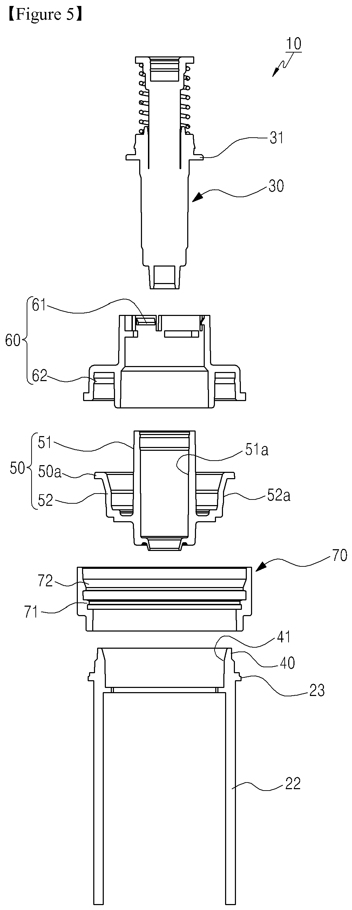

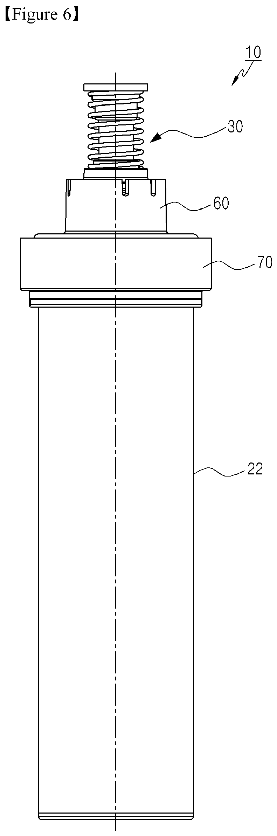

FIG. 4 is an exploded perspective view illustrating the configuration of a liquid container sealing device according to the present disclosure, FIG. 5 is an exploded side cross-sectional view illustrating the configuration of a liquid container sealing device according to the present disclosure, and FIG. 6 is a front view illustrating the coupled state of the liquid container sealing device according to the present disclosure.

First, the configuration of a liquid container sealing device 10 will be described with reference to FIGS. 4 to 6. As illustrated in FIGS. 4 and 5, the sealing device 10 includes a liquid container unit 20, a pumping device 30, a sealing coupling part 40, a sealing unit 50, a fixing unit 60, and a fixing cover unit 70.

The liquid container unit 20 is configured as a double container that is composed of an outer container 21 and an inner container 22. The sealing device may be provided to at least one of the outer container and the inner container. The present embodiment will be described with reference to a case in which the sealing device 10 is applied to the inner container 22.

The inner container 22 is configured to be coupled with the pumping device 30 for sealing.

The pumping device 30 is coupled to the upper end of the inner container 22 in the manner of sealing the inner container 22.

The sealing coupling part 40 is provided at the upper end of the inner container 22 to be oppositely engaged with and sealed by the sealing unit 50 (described later).

The sealing unit 50 may be oppositely engaged with the outer surface of the pumping device 30 so as to seal the pumping device 30, and may be oppositely engaged with the inner side of the sealing coupling part 40 so as to seal the inner container 22.

That is, the inner side of the sealing unit 50 is engaged with and sealed by the outer surface of the pumping device 30, and the outer side of the sealing unit 50 is engaged with the sealing coupling part 40 so as to seal the inner container 22. Accordingly, the sealing unit 50 is capable of sealing both of the pumping device 30 and the inner container 22 together.

The fixing unit 60 is provided between the sealing unit 50 and the pumping device 30 such that the sealing part 50 and the pumping device 30 can be fixedly coupled thereto.

The fixing cover unit 70 is caught by and fixed to the outer side of the inner container 22 in such a manner that the fixing cover unit 70 can be fixedly engaged with the fixing unit 60 and the pumping device 30 and the sealing unit 50 can be fixed to the inner container 22.

That is, the fixing cover portion 70 is engaged with the fixing unit 60 simultaneously being coupled to the outer side of the inner container 22. Due to this, the sealing coupling part 40 of the inner container 22 is maintained in the state of being sealed with the sealing unit 50.

In this way, the sealing unit 50 is engaged with and seals the outer surface of the pumping device 30 simultaneously with being coupled with sealing coupling part 40 of the inner container 22. Thus, since the existing packing unit, which has been provided in order to seal the liquid container unit 20 and the pumping device 30, is not necessary, it is possible to simplify and reduce the assembly steps and time of the product, which enables the automatic assembly of the product, thereby improving the productivity. In addition, due to the reduction of the number of components, it is possible to reduce the manufacturing cost of the product. Further, since the sealing function can be prevented from deteriorating due to the damage of the existing packing unit, it is possible to further improve the sealing performance.

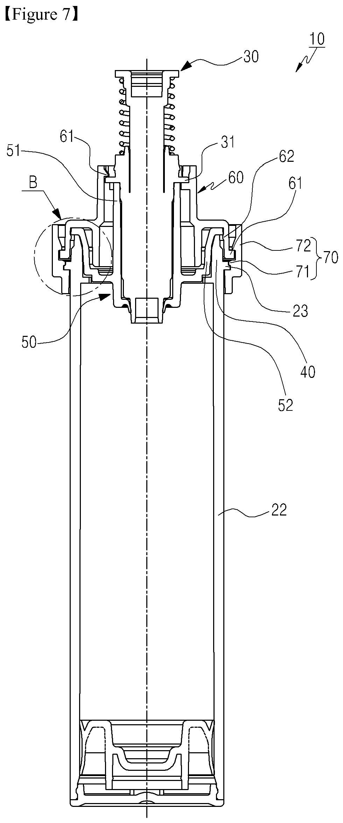

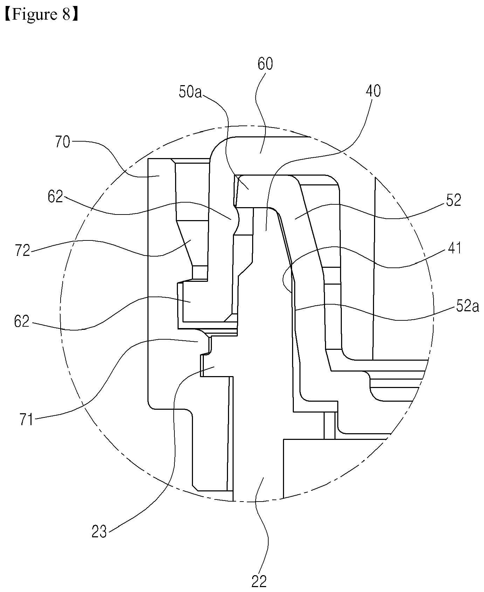

Further, the sealing unit 50 will be described in more detail with reference to FIGS. 7 and 8. First, FIG. 7 is a side cross-sectional view illustrating the coupled state of the liquid container sealing device according to the present disclosure, and FIG. 8 is an enlarged side cross-sectional view of part "B" in FIG. 7, in which first and second sealing parts 51 and 52 of the fixing unit 60 are illustrated.

First, as illustrated in FIG. 5 described above, the sealing unit 50 includes the first and second sealing parts 51 and 52. The first sealing part 51 is oppositely engaged with the outer surface of the pumping device 30 and is provided inside the sealing unit 50 to be capable of sealing the inner container 22 and the pumping device 30.

The second sealing part 52 is provided on the outer side of the sealing unit 50 to be oppositely engaged with the inner surface of the sealing coupling part 40, thereby sealing the inner container 22.

That is, as illustrated in FIGS. 7 and 8, when the first sealing part 51 is formed as a through hole and the pumping device 30 is fitted into the through hole, the outer surface of the pumping device 30 and a first sealing surface 51a formed on the first sealing part 51 to be oppositely engaged with each other, thereby sealing the sealing unit 50 and the pumping device 30.

The second sealing part 52 is formed along the outer circumference of the sealing unit 50 such that when the sealing coupling part 40 of the inner container 22 is oppositely engaged with the inner surface 41 of the sealing coupling part 40, thereby sealing the inner container 22 from the outside.

In addition, the sealing unit 50 is formed with the first sealing surface 51a such that the first sealing surface 51a is oppositely engaged with the outer surface of the pumping device 30, thereby sealing the pumping device 30.

The sealing unit 50 is formed with the second sealing surface 52a such that the second sealing surface 52a is oppositely engaged with the inner surface 41 formed in the sealing coupling part 40, thereby sealing the inner container 22.

Further, the fixing unit 60 will be described in more detail with reference to FIGS. 7 and 8. First, as illustrated in FIGS. 7 and 8, the fixing unit 60 includes first and second fixing parts 61 and 62, in which the first fixing part 61 is formed on the inner side the fixing unit 60 to be caught by and fixed to an engagement projection 31 protruding outward from the pumping device 30.

The second fixing part 62 is formed on the fixing unit 60 so as to be caught by and fixed to an engagement step 50a formed on the sealing unit 50.

The fixing unit 60 is formed with a fixing hole, and the first fixing part 61 is formed within the fixing hole. When the pumping device 30 is coupled from the upper part to the lower part of the fixing hole, the engagement projection 31 on the pumping device 30 is caught by and fixed to the first fixing part 61. In addition, when the sealing unit 50 is coupled to the lower portion of the fixing unit 60, the engagement step 50a formed on the closing unit 50 is fixedly fitted into the second fixing part 62 in the fixing unit 60.

In addition, the fixing cover unit 70 includes first and second hook parts 71 and 72. The first hook part 71 is formed on the inner side of the fixing cover unit 70 such that the first hook part 71 is caught by and fixed to a fixing engagement step 23 in the inner container 22.

The second hook part 72 is formed on the inner side of the fixing cover unit 70 such that the second hook part 72 can be caught by and fixed to the engagement step 50a formed in the sealing unit 50, thereby maintaining the sealed state of the sealing unit 50 and the sealing coupling part 40.

That is, as illustrated in FIG. 8, the pumping device 30 is fixedly fitted into the hole of the sealing coupling part 40. At this time, when the sealing coupling part 40 is engaged with the sealing unit 50, the outer surface of the pumping device 30 is oppositely engaged with the hole of the sealing unit 50. In this state, the second fixing part 62 of the fixing unit 60 is fitted into and engaged with the second hook part 72 of the fixing cover unit 70.

At this time, the first hook part 71 of the fixing cover unit 70 is caught by and fixed to the fixing engagement step 23 in the inner container 22.

Therefore, the second engagement step 50a in the sealing unit 50 is caught by and fixed to the second hook portion 72 in the fixing cover unit 70, the pumping device 30 is fixed to the inner container 22, and the sealing coupling portion 40 in the inner container 22 and the sealing unit 50 are maintained in the sealed state. In addition, the sealing unit 50, which is oppositely engaged with the outer surface of the pumping device 30, is also maintained in the sealed state.

The sealing unit 50 may be made of a soft Low-Density PolyEthylene (LDPE). Although the present embodiment is described with reference to a case in which the sealing unit 50 is made of a soft LDPE, the present disclosure is not limited thereto. That is, soft materials are variously applicable so long as the materials are engaged with and seal the inner container 22 and the pumping device 30 simultaneously when the sealing coupling part 40 is engaged with the sealing unit 50. For example, the sealing coupling part 40 may be made of silicone, rubber, or the like.

In addition, the outer container 21 and the inner container 22 may be formed to have any one of an elliptical shape, a circular shape, a rhombic shape, a triangular shape, a rectangular shape, and a rectangular shape. In addition to the above-mentioned shapes, other shapes are also applicable to the outer container 21 and the inner container 22. The present embodiment will be described with reference to the case in which the inner container 22 has an elliptical shape, as an example.

Here, the assembly and operation of the liquid container sealing device 10 will be described with reference to FIGS. 4 to 6 described above. First, as illustrated in FIGS. 4 and 5, the sealing device 10 includes the liquid container unit 20 including the outer container 21 and the inner container 22, the pumping device 30, the sealing coupling part 40, the sealing unit 50, the fixing unit 60, and the fixing cover unit 70. In this state, the pumping device 30 is coupled into the through hole in the fixing part 60. At this time, the engagement protrusion 31 formed on the outer side of the pumping device 30 is caught by and fixed to the first fixing part 61 formed on the inner side of the fixing unit 60. The fixing unit 60 coupled with the pumping device 30 is engaged with the sealing unit 50. At this time, the engagement step 50a in the sealing unit 50 is caught by and fixed to the second fixing part 62 in the fixing unit 60.

When the sealing unit 50 and the fixing unit 60 are coupled to each other, the first sealing part 51 provided on the inner side of the sealing part 50 may be oppositely engaged with the outer surface of the pumping device 30. That is, since the first sealing unit 51 is formed with the first sealing surface 51a that is oppositely engaged with the outer surface of the pumping device 30 to be sealed, when the pumping device 30 is coupled to the sealing unit 50, the first sealing surface 51a is oppositely engaged with the outer surface of the pumping device 30 to be sealed.

After the pumping device 30, the sealing unit 50, and the fixing unit 60 are coupled to each other as described above, the second sealing surface 52a in the sealing unit 50 is oppositely engaged with the sealing coupling part 40 on the inner container 22. In this state, since the fixing cover unit 70 is fitted to the inner container 22, and the fixing cover unit 70 is formed with the first hook part 71 that is caught by and fixed to the fixing engagement step 23 formed on the outer side of the inner container 22, the first hook part 71 is fixedly fitted into the fixing engagement step 23 in the inner container 22 when the fixing cover unit 70 is fitted to the inner container 22.

At the same time, the second hook part 72 in the fixing cover unit 70 is caught by and fixed to the engagement step 50a on the closing unit 50. At this time, the engagement step 50a of the sealing unit 50 and the second hook part 72 are fixedly engaged with each other, thereby maintaining the sealed state of the sealing unit 50 and the sealing engagement part 40.

Therefore, the sealing unit 50 is oppositely engaged with the sealing engagement part 40 of the inner container 22, thereby being sealed. In addition, the fixing cover unit 70 enables the sealing unit 50 to be coupled to the upper end of the inner container 22, and also enables the pumping device 30 to be coupled thereto.

In other words, the sealing unit 50 is coupled with the pumping device 30 to seal the pumping device 30, and in this state, the sealing unit 50 is engaged with the inner container 22, thereby sealing the inner container 22.

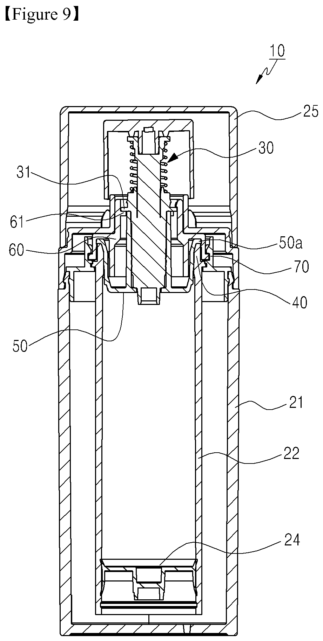

In this state, as illustrated in FIG. 9, the outer container 21 is coupled to the outer side of the inner container 22, and the outer cover unit 25 is detachably coupled to the outer container 21, thereby completing the liquid container unit 10.

That is, the inner container 22 is provided in the outer container 21, and the outer cover 25 is coupled to the outer side of the pumping device 30 so as to protect the inner container 22 and the pumping device 30.

As described above, the existing liquid container 2 (see FIG. 1) includes a rubber packing unit (see FIGS. 2 and 3) in order to seal a pressurizing pumping device 1 (see FIGS. 1 and 3) and the liquid container. Thus, there is a disadvantage in that the existing packing unit is easily damaged or deformed, and thus the sealing function is lost and the cosmetic provided in the liquid container is deteriorated.

In the present embodiment, in order to overcome this disadvantage, a sealing unit 50 (see FIG. 4) is configured to be coupled to and seal the inner container and the pumping device 30 (see FIG. 4) without the existing packing unit. Thus, because the number of components is reduced, the assembly process and time of the product can be reduced, and because the automatic assembly of the product is enabled, the productivity can be increased and the sealing function of the product can also be improved.

While the above-described liquid container sealing device according to the present disclosure has been shown and described with reference to certain embodiments thereof, it will be understood by those skilled in the art that various changes in form and details may be made therein without departing from the scope of the present disclosure as defined by the appended claims.

## Claims

1. A liquid container sealing device (10) comprising
a liquid container unit;
a pumping device (30) provided in the liquid container unit;
a sealing coupling part (40) provided at an upper end of the liquid container unit;
a sealing unit (50) that is oppositely engaged with an outer surface of the pumping device, thereby sealing the pumping device, and is oppositely engaged with an inner side of the sealing coupling part, thereby sealing the liquid container unit;
**characterized in that** the liquid container sealing device further comprises:
a fixing unit (60) that fixedly couples the sealing unit and the pumping device to each other; and
a fixing cover unit (70) that fixes the pumping device and the sealing unit to the liquid container unit by being coupled to an outer side of the liquid container unit and by being coupled to the fixing unit.

2. The sealing device of claim 1, wherein the liquid container is formed as anyone of an outer container (21) and an inner container (22), and the sealing device is provided in at least any one of the outer container and the inner container.

3. A liquid container sealing device (10) comprising:
a liquid container unit including an outer container (21) and an inner container (22);
a pumping device (30) provided in the inner container;
a sealing coupling part (40) provided at an upper end of the inner container;
a sealing unit (50) that is oppositely engaged with an outer surface of the pumping device, thereby sealing the pumping device, and is oppositely engaged with an inner side of the sealing coupling part, thereby sealing the liquid container
wherein the liquid container sealing device further comprises:
a fixing unit (60) that causes the sealing unit and the pumping device to be coupled and fixed to each other; and
a fixing cover unit (70) that is coupled to an outer side of the inner container and is coupled to the fixing unit, thereby fixing the pumping device and the sealing unit to the inner container.

4. The sealing device of claim 3, wherein the inner container (22) has a fixing engagement step (23) formed on an outer surface thereof such that the fixing engagement step is caught by and fixed to the fixing cover unit (70) while being engaged with the fixing unit (60).

5. The sealing device of claim 3, wherein the sealing unit (50) includes:
a first sealing part (51) provided on an inner side of the sealing unit to be oppositely engaged with an outer surface of the pumping device (30) and to seal the inner container (22) and the pumping device part; and
a second sealing part (52) provided on an outer side of the sealing unit to be engaged with an inner surface of the sealing coupling part (40) and to be oppositely engaged with and seal the inner container.

6. The sealing device of claim 5, wherein the sealing unit (50) has a first sealing surface (51a) formed to be oppositely engaged with and sealed by the outer surface of the pumping device (30), and
the sealing unit has a second sealing surface (52a) formed to oppositely engaged with and sealed by an inner surface formed in the sealing coupling part (40).

7. The sealing device of claim 3, wherein the fixing unit (60) includes:
a first fixing part (61) formed on an inner side of the fixing unit to be caught by and fixed to an engagement protrusion (31) protruding from the outer side of the pumping device (30); and
a second fixing part (62) formed on the fixing unit to be caught by and fixed to the engagement step (50a) formed on the sealing unit (50).

8. The sealing device of claim 3, wherein the fixing cover unit (70) includes:
a first hook part (71) formed on an inner side of the fixing cover unit to be caught by and fixed to a fixing engagement step (23) of the inner container (22); and
a second hook part (72) formed on an inner side of the fixing cover part to be caught by and fixed to the engagement step (50a) formed on the sealing unit (50) and to maintain a closed state of the sealing unit and the sealing coupling part (40).

9. The sealing device of claim 3, wherein the sealing unit (50) is made of a soft Low-Density PolyEthylene (LDPE).

10. The sealing device of claim 3, wherein the outer container (21) and the inner container (22) are formed to have any one of an elliptical shape, a circular shape, a rhombic shape, a triangular shape, a rectangular shape, and a rectangular shape.

## Patentansprüche

1. Flüssigkeitsbehälter-Dichtungsvorrichtung (10), aufweisend eine Flüssigkeitsbehältereinheit;
eine Pumpvorrichtung (30), die in der Flüssigkeitsbehältereinheit bereitgestellt ist;
ein Dichtkupplungsteil (40), das an einem oberen Ende der Flüssigkeitsbehältereinheit bereitgestellt ist;
eine Dichtungseinheit (50), die gegenläufig mit einer Außenfläche der Pumpvorrichtung in Eingriff steht, wodurch die Pumpvorrichtung abgedichtet wird, und gegenläufig mit einer Innenseite des Dichtkupplungsteils in Eingriff steht, wodurch die Flüssigkeitsbehältereinheit abgedichtet wird; **dadurch gekennzeichnet, dass** die Flüssigkeitsbehälter-Dichtungsvorrichtung ferner aufweist:
eine Befestigungseinheit (60), die die Dichtungseinheit und die Pumpvorrichtung fest aneinander koppelt; und
eine Befestigungsdeckeleinheit (70), die die Pumpvorrichtung und die Dichtungseinheit an der Flüssigkeitsbehältereinheit befestigt, indem sie an eine Außenseite der Flüssigkeitsbehältereinheit gekoppelt ist und indem sie an die Befestigungseinheit gekoppelt ist.

2. Dichtungsvorrichtung nach Anspruch 1, wobei der Flüssigkeitsbehälter als ein äußerer Behälter (21) und ein innerer Behälter (22) ausgebildet ist, und die Dichtungsvorrichtung in mindestens einem des äußeren Behälters und des inneren Behälters bereitgestellt ist.

3. Flüssigkeitsbehälter-Dichtungsvorrichtung (10), aufweisend:
eine Flüssigkeitsbehältereinheit mit einem äußeren Behälter (21) und einem inneren Behälter (22);
eine Pumpvorrichtung (30), die in dem inneren Behälter bereitgestellt ist;
ein Dichtkupplungsteil (40), das an einem oberen Ende des inneren Behälters bereitgestellt ist;
eine Dichtungseinheit (50), die gegenläufig mit einer Außenfläche der Pumpvorrichtung in Eingriff steht, wodurch die Pumpvorrichtung abgedichtet wird, und gegenläufig mit einer Innenseite des Dichtkupplungsteils in Eingriff steht, wodurch die Flüssigkeitsbehältereinheit abgedichtet wird; wobei die Flüssigkeitsbehälter-Dichtungsvorrichtung ferner aufweist:
eine Befestigungseinheit (60), die dazu führt, dass die Dichtungseinheit und die Pumpvorrichtung aneinander gekoppelt und befestigt werden; und
eine Befestigungsdeckeleinheit (70), die an eine Außenseite des inneren Behälters gekoppelt ist und an die Befestigungseinheit gekoppelt ist, wodurch die Pumpvorrichtung und die Dichtungseinheit an dem inneren Behälter befestigt werden.

4. Dichtungsvorrichtung nach Anspruch 3, wobei der innere Behälter (22) eine Befestigungs-Eingriffsstufe (23) hat, die an einer Außenfläche davon ausgebildet ist, sodass die Befestigungseingriffsstufe durch die Befestigungsdeckeleinheit (70) erfasst und daran während des Eingriffs in die Befestigungseinheit (60) befestigt wird.

5. Dichtungsvorrichtung nach Anspruch 3, wobei die Dichtungseinheit (50) enthält:
einen ersten Dichtungsteil (51), der an einer Innenseite der Dichtungseinheit für einen gegenläufigen Eingriff in eine Außenfläche der Pumpvorrichtung (30) und zum Abdichten des inneren Behälters (22) und des Pumpenvorrichtungsteils bereitgestellt ist; und
einen zweiten Dichtungsteil (52), der an einer Außenseite der Dichtungseinheit für einen Eingriff in eine Innenfläche des Dichtkupplungsteils (40) und einen gegenläufigen Eingriff in den und zum Abdichten des inneren Behälters bereitgestellt ist.

6. Dichtungsvorrichtung nach Anspruch 5, wobei die Dichtungseinheit (50) eine erste Dichtfläche (51a) hat, die ausgebildet ist, um in gegenläufigen Eingriff mit der Außenfläche der Pumpvorrichtung (30) zu treten und durch die Außenfläche der Pumpvorrichtung abgedichtet zu werden, und
die Dichtungseinheit eine zweite Dichtfläche (52a) hat, die ausgebildet ist, um in gegenläufigen Eingriff mit einer Innenseite zu treten und durch eine Innenseite abgedichtet zu werden, die in dem Dichtkupplungsteil (40) ausgebildet ist.

7. Dichtungsvorrichtung nach Anspruch 3, wobei die Befestigungseinheit (60) enthält:
einen ersten Befestigungsteil (61), der an einer Innenseite der Befestigungseinheit ausgebildet ist, um durch einem Eingriffsvorsprung (31) erfasst und befestigt zu werden, der von der Außenseite der Pumpvorrichtung (30) herausragt; und
einen zweiten Befestigungsteil (62), der an der Befestigungseinheit ausgebildet ist, um durch die Eingriffsstufe (50a) erfasst und daran befestigt zu werden, die auf der Dichtungseinheit (50) ausgebildet ist.

8. Dichtungsvorrichtung nach Anspruch 3, wobei die Befestigungsdeckeleinheit (70) enthält:
einen ersten Hakenteil (71), der an einer Innenseite der Befestigungsdeckeleinheit ausgebildet ist, um durch eine Befestigungs-Eingriffsstufe (23) des inneren Behälters (22) erfasst und daran befestigt zu werden; und
einen zweiten Hakenteil (72), der an einer Innenseite des Befestigungsdeckelteils ausgebildet ist, um durch die Eingriffsstufe (50a) erfasst und daran befestigt zu werden, die auf der Dichtungseinheit (50) ausgebildet ist, und um einen geschlossenen Zustand der Dichtungseinheit und des Dichtkupplungsteils (40) aufrechtzuerhalten.

9. Dichtungsvorrichtung nach Anspruch 3, wobei die Dichtungseinheit (50) aus einem weichen Polyethylen mit geringer Dichte (LDPE) besteht.

10. Dichtungsvorrichtung nach Anspruch 3, wobei der äußere Behälter (21) und der innere Behälter (22) so ausgebildet sind, dass sie eine elliptische Form, eine kreisförmige Form, eine rautenförmige Form, eine dreieckige Form, eine rechtwinklige Form oder eine rechtwinklige Form haben.

## Revendications

1. Dispositif d'étanchéité de récipient de liquide (10) comprenant
une unité de récipient de liquide ;
un dispositif de pompage (30) prévu dans l'unité de récipient de liquide ;
une partie de couplage d'étanchéité (40) prévue au niveau d'une extrémité supérieure de l'unité de récipient liquide ;
une unité d'étanchéité (50) qui est engagée en sens opposé avec une surface externe du dispositif de pompage, assurant ainsi l'étanchéité du dispositif de pompage, et est engagée en sens opposé avec un côté interne de la partie de couplage d'étanchéité, assurant ainsi l'étanchéité de l'unité de récipient de liquide ;
**caractérisé en ce que** le dispositif d'étanchéité de récipient de liquide comprend en outre :
une unité de fixation (60) qui couple de manière fixe l'unité d'étanchéité et le dispositif de pompage l'un à l'autre ; et
une unité de couvercle de fixation (70) qui fixe le dispositif de pompage et l'unité d'étanchéité à l'unité de récipient de liquide en étant couplée à un côté externe de l'unité de récipient de liquide et en étant couplée à l'unité de fixation.

2. Dispositif d'étanchéité selon la revendication 1, ledit récipient de liquide étant formé en tant que l'un quelconque d'un récipient externe (21) et d'un récipient interne (22), et ledit dispositif d'étanchéité étant prévu dans au moins l'un quelconque du récipient externe et du récipient interne.

3. Dispositif d'étanchéité de récipient de liquide (10) comprenant :
une unité de récipient de liquide comprenant un récipient externe (21) et un récipient interne (22) ;
un dispositif de pompage (30) prévu dans le récipient interne ;
une partie de couplage d'étanchéité (40) prévue au niveau d'une extrémité supérieure du récipient interne ;
une unité d'étanchéité (50) qui est engagée en sens opposé avec une surface externe du dispositif de pompage, assurant ainsi l'étanchéité du dispositif de pompage, et est engagée en sens opposé avec un côté interne de la partie de couplage d'étanchéité, assurant ainsi l'étanchéité du récipient de liquide ;
ledit dispositif d'étanchéité de récipient de liquide comprenant en outre :
une unité de fixation (60) qui amène l'unité d'étanchéité et le dispositif de pompage à se coupler et se fixer l'un à l'autre ; et
une unité de couvercle de fixation (70) qui est couplée à un côté externe du récipient interne et est couplée à l'unité de fixation, fixant ainsi le dispositif de pompage et l'unité d'étanchéité au récipient interne.

4. Dispositif d'étanchéité selon la revendication 3, ledit récipient interne (22) comportant un échelon d'engagement de fixation (23) formé sur une surface externe de celui-ci de sorte que l'échelon d'engagement de fixation soit pris par l'unité de couvercle de fixation (70), et fixé à celle-ci, tout en étant engagé avec l'unité de fixation (60).

5. Dispositif d'étanchéité selon la revendication 3, ladite unité d'étanchéité (50) comprenant :
une première partie d'étanchéité (51) prévue sur un côté interne de l'unité d'étanchéité pour être engagée en sens opposé avec une surface externe du dispositif de pompage (30) et pour assurer l'étanchéité du récipient interne (22) et de la partie de dispositif de pompage ; et
une seconde partie d'étanchéité (52) prévue sur un côté externe de l'unité d'étanchéité pour être engagée avec une surface interne de la partie de couplage d'étanchéité (40) et être engagée en sens opposé avec le récipient interne et en assurer l'étanchéité.

6. Dispositif d'étanchéité selon la revendication 5, ladite unité d'étanchéité (50) possédant une première surface d'étanchéité (51a) formée pour être engagée en sens opposé avec la surface externe du dispositif de pompage (30), et être rendue étanche par celle-ci, et
ladite unité d'étanchéité possédant une seconde surface d'étanchéité (52a) formée pour être engagée en sens opposé avec une surface interne formée dans la partie de couplage d'étanchéité (40) et être rendue étanche par celle-ci.

7. Dispositif d'étanchéité selon la revendication 3, ladite unité de fixation (60) comprenant :
une première partie de fixation (61) formée sur un côté interne de l'unité de fixation pour être prise par une protubérance d'engagement (31) et fixée à celle-ci qui fait saillie depuis le côté externe du dispositif de pompage (30) ; et
une seconde partie de fixation (62) formée sur l'unité de fixation pour être prise par l'échelon d'engagement (50a) et fixé à celui-ci qui est formé sur l'unité d'étanchéité (50).

8. Dispositif d'étanchéité selon la revendication 3, ladite unité de couvercle de fixation (70) comprenant :
une première partie de crochet (71) formée sur un côté interne de l'unité de couvercle de fixation pour être prise par un échelon d'engagement de fixation (23) du récipient interne (22) et fixée à celui-ci ; et
une seconde partie de crochet (72) formée sur un côté interne de la partie de couvercle de fixation pour être prise par l'échelon d'engagement (50a) et fixée à celui-ci qui est formé sur l'unité d'étanchéité (50) et pour maintenir un état fermé de l'unité d'étanchéité et de la partie de couplage d'étanchéité (40).

9. Dispositif d'étanchéité selon la revendication 3, ladite unité d'étanchéité (50) étant constituée d'un polyéthylène basse densité (LDPE) souple.

10. Dispositif d'étanchéité selon la revendication 3, ledit récipient externe (21) et ledit récipient interne (22) étant formés pour avoir l'une quelconque d'une forme elliptique, d'une forme circulaire, d'une forme rhombique, d'une forme triangulaire, d'une forme rectangulaire et d'une forme rectangulaire.
